# EUROPÄISCHE PATENTSCHRIFT

(11) **EP 1 827 739 B1**
(45) Veröffentlichungstag und Bekanntmachung des Hinweises auf die Patenterteilung: **19.08.2009**
(21) Anmeldenummer: 04803653.7
(22) Anmeldetag: 09.12.2004
(51) Int. Cl.: B22F 9/24, C22B 34/24, B22F 9/28

(54) **HERSTELLUNG VON VENTILMETALLPULVERN**
PRODUCTION OF VALVE METAL POWDERS
PRODUCTION DE POUDRES DE METAL SOUPAPE

(43) Veröffentlichungstag der Anmeldung: 05.09.2007
(73) Patentinhaber: H.C. Starck GmbH, 38642 Goslar (DE)
(72) Erfinder: LÖFFELHOLZ, Josua, 38685 Langelsheim (DE); BEHRENS, Frank, 38667 Bad Harzburg (DE); SCHMIEDER, Siegfried, 38642 Goslar (DE)
(86) Internationale Anmeldenummer: PCT/EP2004/013987
(87) Internationale Veröffentlichungsnummer: WO 2006/061040

(56) Entgegenhaltungen:
- DE-A1- 3 330 455
- US-A- 5 442 978

## Beschreibung

Die Erfindung betrifft ein Verfahren zur Herstellung von Ventilmetallpulvern, insbesondere von Tantalpulvern, durch Reduktion einer geeigneten Ventilmetallverbindung mit einem Alkalimetall, wobei die Reduktion in Gegenwart eines Kornverfeinerers erfolgt, der portionsweise oder kontinuierlich zugegeben wird.

Ventilmetalle, worunter insbesondere Tantal und dessen Legierungen, sowie andere Metalle der Gruppe IVb (Ti, Zr, Hf), Vb (V, Nb, Ta) und VIb (Cr, Mo, W) des Periodensystems der Elemente sowie deren Legierungen zu verstehen sind, finden bei der Bauteilherstellung vielfältige Verwendung. Besonders hervorzuheben ist der Einsatz von Niob oder Tantal zur Herstellung von Kondensatoren.

Bei der Herstellung von Niob- oder Tantalkondensatoren geht man üblicherweise von entsprechenden Metallpulvern aus, die zunächst verpresst und anschließend gesintert werden, um einen porösen Körper zu erhalten. Dieser wird in einem geeigneten Elektrolyten anodisiert, wobei sich ein dielektrischer Oxidfilm auf dem Sinterkörper ausbildet. Die physikalischen und chemischen Eigenschaften der eingesetzten Metallpulver haben einen entscheidenden Einfluss auf die Eigenschaften des Kondensators. Entscheidende Charakteristika sind beispielsweise die spezifische Oberfläche und der Gehalt an Verunreinigungen.

Tantalpulver einer Qualität, die den Einsatz zur Herstellung von Kondensatoren erlaubt, wird üblicherweise durch Natriumreduktion von K₂TaF₇ hergestellt. Dabei wird K₂TaF₇ in einer Retorte vorgelegt und durch flüssiges Natrium reduziert. Der Kontrolle der Korngröße und damit der spezifischen Oberfläche kommt bei dieser Reaktion eine besondere Bedeutung zu, da durch diese Eigenschaften die spezifische Kapazität der daraus hergestellten Kondensatoren bestimmt wird. Je feiner das Korn, desto höher die spezifische Ladung.

Aus US-A 5 442 978 ist bekannt, dass die Kornfeinheit durch die folgenden Faktoren beeinflusst werden kann:
1. Eine hohe Reaktionstemperatur bewirkt ein schnelleres Kornwachstum und damit die Bildung eines gröberen Korns.
2. Ein Überschuss an Reduktionsmittel während der Reaktion führt zur Bildung vieler Kristallisationskeime. Eine schnelle Zugabe von Natrium ist daher vorteilhaft.
3. Eine hohe Verdünnung von K₂TaF₇ in einer Salzschmelze führt zu einer Bildung von vielen einzelnen Kristallisationskeimen und ist daher vorteilhaft.

US-A 5 442 978 schlägt daher vor, zur Herstellung von Tantalpulver mit hoher spezifischer Oberfläche hoch verdünntes K₂TaF₇ durch schrittweise Zugabe von Natrium herzustellen, wobei die Zugabe mit einer hohen Rate erfolgt. Angaben darüber, welche spezifischen Oberflächen mit diesem Verfahren erhalten werden können, fehlen. Bei dieser Umsetzung treten im Verlauf der Reaktion ungleichmäßige Konzentrationsverhältnisse der Reaktanden auf. Die K₂TaF₇ Konzentration ist anfangs hoch, nimmt mit Zugabe des Natriums aber beständig ab, so dass die Korngrößenverteilung des entstehenden Pulvers sehr breit ist.

Gemäß US-A 4 684 399 ist es vorteilhaft, die Tantalverbindung während der Reduktion kontinuierlich oder schrittweise zuzugeben. Durch diese Maßnahme bleibt die Konzentration an Tantalverbindung während des Reduktionsprozesses gleichförmiger. Vorzugsweise wird auch das Reduktionsmittel Natrium kontinuierlich oder schrittweise zugegeben.

Auch DE 33 30 455 A1 beschreibt ein Verfahren zur Herstellung von Ventilmetallpulvern mit dem Ziel, Pulver mit feiner Körnung und großer Oberfläche zu erhalten. Dazu wird eine Reaktionsmischung aus Reduktionsmetall und Doppelfluorsalz des ventilmetalls in Gegenwart eines Dotierungselementes zur Umsetzung gebracht. Als Dotierungselement wird elementarer Schwefel oder eine Schwefelverbindung, beispielsweise Na₂SO₄, vorgeschlagen. Die Reaktionspartner werden gemeinsam vorgelegt und in einer Batch-Reaktion umgesetzt. Die erhaltenen Ventilmetallpulver weise BET-Oberflächen von bis zu 0,64 m²/g auf.

Aufgabe der vorliegenden Erfindung ist es, ein Verfahren zur Herstellung von Ventilmetallpulvern zur Verfügung zu stellen, das sich durch einen hohen Durchsatz und gleichzeitig eine verbesserte Qualität, insbesondere eine hohe spezifische Oberfläche der erhaltenen Pulver auszeichnet.

Die Aufgabe wird dadurch gelöst, dass die Reduktion einer Ventilmetallverbindung in Gegenwart eines Kornverfeinerers durchgeführt wird, der portionsweise oder kontinuierlich zugegeben wird.

Gegenstand der Erfindung ist daher ein Verfahren zur Herstellung von Ventilmetallpulvern durch Reduktion einer Ventilmettallverbindung mit einem Alkalimetall in Gegenwart eines Verdünnungssalzes, wobei die Reduktion in Gegenwart eines Komverfeinerers erfolgt, der portionsweise in mindestens 2 Portionen oder kontinuierlich zugegeben wird.

Das erfindungsgemäße Verfahren erlaubt die Herstellung von Ventilmetallpulvern mit hohem Durchsatz. Durch die portionsweise oder kontinuierliche Zugabe des Kornverfeinerers wird gewährleistet, dass die Schwankung der Konzentration an Konverfeinerer während des Reduktionsprozesses möglichst gering gehalten wird. Es hat sich gezeigt, dass dies entscheidend ist, um Ventilmetallpulver zu erhalten, die sich durch eine hohe spezifische Oberfläche und eine enge

Partikelgrößenverteilung auszeichnen.

Das erfindungsgemäße Verfahren eignet sich zur Herstellung verschiedenster Ventilmetallpulver. Vorzugsweise werden jedoch Niob- oder Tantalpulver, insbesondere bevorzugt Tantalpulver hergestellt.

Bevorzugt handelt es sich bei dem Ventilmetall also um Tantal. Als tantalhaltige Ventilmetallverbindung können beispielsweise K₂TaF₇, Na₂TaF₇, TaCl₅ oder Mischungen davon eingesetzt werden. Bevorzugt kommt K₂TaF₇ zum Einsatz.

Geeignete Verdünnungssalze sind dem Fachmann bekannt. Beispielhaft seien NaCl, KCl, KF oder deren Mischungen genannt. Vorzugsweise wird das Verdünnungssalz im Reaktor vorgelegt, bevor es zur Umsetzung von Ventilmetallverbindung und Alkalimetall kommt. Das Verdünnungssalz wird vorzugsweise in einer Menge von 40 bis 80 Gew.%, bezogen auf die Summe der Mengen an Ventilmetallverbindung, Alkalimetall und Verdünnungssalz eingesetzt.

Als Reduktionsmittel wird erfindungsgemäß Alkalimetall eingesetzt. Geeignete Alkalimetalle sind beispielsweise Na, K oder deren Mischungen oder Legierungen. Vorzugsweise wird mit Natrium reduziert. Die Gesamtmenge an eingesetztem Alkalimetall beträgt vorzugsweise das 0,9 bis 1,5-fache, insbesondere bevorzugt das 1 bis 1,05-fache der stöchiometrisch benötigten Menge zur vollständigen Reduktion der Ventilmetallverbindung.

Das Alkalimetall kann dem Reaktor in einer Portion vor Start der Reduktionsreaktion zugegeben werden. Vorzugsweise wird das Alkalimetall jedoch kontinuierlich oder portionsweise während der Reduktion zugegeben. Die Zugaberate des Alkalimetalls kann im Verhältnis zur Zugaberate an Ventilmetallverbindung gezielt gesteuert werden, um die gewünschten Pulvereigenschaften, insbesondere die Partikelgröße, einzustellen.

Auch die Ventilmetallverbindung kann dem Reaktor in einer Portion vor Start der Reduktionsreaktion zugegeben werden. Vorzugsweise wird jedoch auch diese kontinuierlich oder portionsweise während der Reduktion zugegeben.

Die Gesamtmenge an Ventilmetallverbindung und Alkalimetall beträgt vorzugsweise 20 bis 60 Gew.-%, bezogen auf die Summe der Mengen an Ventilmetallverbindung, Alkalimetall und Verdünnungssalz.

Als Kornverfeinerer kann beispielsweise eine schwefelhaltige, eine phosphorhaltige, eine borhaltige und/oder eine siliciumhaltige Verbindung eingesetzt werden. Geeignete schwefelhaltige Kornverfeinerer sind beispielsweise Schwefel, Kaliumsulfat, Kaliumsulfit, Kaliumsulfid, Natriumsulfat, Natriumsulfit, Natriumsulfid oder Tantalsulfid. Geeignete phosphorhaltige Kornverfeinerer sind beispielsweise Natrium- oder Kaliumphosphate, Phosphor, Phosphide. Geeignete borhaltige Kornverfeinerer sind beispielsweise Borax, KBF₄, NaBF₄ oder Boride und geeignete siliciumhaltige Kornverfeinerer Kieselsäure, Silikate oder Siliciumnitrid.

Vorzugsweise werden als Kornverfeinerer Schwefel, Alkalimetallsulfat, Alkalimetallsulfit, Alkalimetallsulfid und/oder Tantalsulfid eingesetzt, insbesondere bevorzugt Na₂SO₄.

Die Gesamtmenge an eingesetztem Kornverfeinerer beträgt vorzugsweise 0,01 bis 2 Gew.-%, insbesondere bevorzugt 0,02 bis 0,4 Gew.-%, bezogen auf die Summe der Mengen an Ventilmetallverbindung, Alkalimetall und Verdünnungssalz.

Erfindungsgemäß wird der Kornverfeinerer portionsweise in mindestens 2 Portionen oder kontinuierlich zugegeben. Vorzugsweise erfolgt die Zugabe portionsweise in mindestens 2 Portionen. Die erste Portion kann dem Reaktor schon vor Start der Reduktion zugegeben werden.

Besonders bevorzugt wird der Kornverfeinerer portionsweise in 2 bis 50 gleich großen Portionen zudosiert. Insbesondere bevorzugt erfolgt die Zugabe gemeinsam mit der Ventilmetallverbindung.

Bei Einsatz von Kornverfeinerem, die bei den Reduktionstemperaturen verdampfen, wie beispielsweise Schwefel oder Phosphor ist darauf zu achten, dass die Zugabe in eine Reaktionsmischung erfolgt, die einen Überschuss an Alkalimetall aufweist. In diesem Fall erfolgt die Zugabe des Kornverfeinerers vorzugsweise jeweils unmittelbar nach Zugabe des Alkalimetalls.

Soll das Verfahren kontinuierlich durchgeführt werden, kann beispielsweise so vorgegangen werden, dass die umgesetzte Schmelze über einen Bodenablass oder ein beheiztes Heberrohr abgelassen wird.

Die Reduktion wird vorzugsweise bei einer Temperatur von 800 bis 1000°C durchgeführt. Zunächst muss die Reaktionsmischung erhitzt werden, bis die Reduktion beginnt. Da die Reduktion stark exotherm verläuft, kann es notwendig werden, die Reaktionsmischung während der Reduktion zu kühlen.

Das erfindungsgemäße Verfahren kann in bekannten Reaktoren, wie sie beispielsweise in US-A 4 684 399 und US-A 5 442 978 beschrieben sind, durchgeführt werden.

In einer besonderen Ausführungsform des erfindungsgemäßen Verfahrens wird die gesamte Menge an Verdünnungssalz vorgelegt und eine erste Portion an Ventilmetallverbindung und Kornverfeinerer zugegeben. Diese Mischung wird auf die Reduktionstemperatur gebracht, bevor durch Kornverfeinerer zugegeben. Diese Mischung wird auf die Reduktionstemperatur gebracht, bevor durch Zugabe einer ersten Portion an Alkalimetall die Reduktion gestartet wird. Abwechselnd werden nun weitere Portionen an Ventilmetallverbindung und Alkalimetall zudosiert, wobei gleichzeitig mit der Zugabe der Ventilmetallverbindung auch weiterer Kornverfeinerer zugegeben wird. Die Reaktionstemperatur wird durch Erhitzen und/oder Abkühlen möglichst konstant gehalten. Die Menge und/oder Zugaberate wird vorzugsweise so gewählt, dass über den gesamten Reduktionszeitraum die Konzentration der drei Komponenten Ventilmetallverbindung, Alkalimetall und Kornverfeinerer möglichst wenig schwankt. Auf diese Weise wird ein Pulver erhalten, dass eine enge Korngrößenverteilung aufweist. Vorzugsweise erfolgt die Zugabe der Komponenten Ventilmetallverbindung, Alkalimetall und Kornverfeinerer in gleichbleibend großen Mengen, wobei die Zugaberate so gewählt wird, dass eine weitere Portion einer Komponente immer dann zugegeben wird, wenn diese Komponente nahezu vollständig, beispielsweise zu 95 % umgesetzt ist. Diese Ausführungsform kann auch dahingehend abgewandelt werden, dass eine erste Portion Alkalimetall im Verdünnungssalz vorgelegt, und die Reduktion durch Zugabe von Ventilmetallverbindung und Kornverfeinerer gestartet wird. In diesem Fall ist die Zugabereihenfolge also vertauscht.

In einer weiteren Ausführungsform wird die Reduktion semi-kontinuierlich durchgeführt, wobei das Verdünnungssalz in einem Reaktor vorgelegt und Ventilmetallverbindung und Alkalimetall abwechselnd zudosiert werden, wobei die zudosierte Menge der Ventilmetallverbindung stöchiometrisch jeweils einem Mehrfachen der Menge des zudosierten Alkalimetalls entspricht. Der Kornverfeinerer wird wiederum vorzugsweise gleichzeitig mit der Ventilmetallverbindung zudosiert.

Vorzugsweise wird dabei die jeweils zudosierte Menge an Ventilmetallverbindung und Kornverfeinerer proportional zur Menge der durch die Reduktion erhöhten Menge Verdünnungssalz im Reaktor erhöht oder die Dosierfrequenz entsprechend erhöht, wobei gegen Ende der Reduktion die Menge an jeweils zudosierter Portion Ventilmetallverbindung auf die stöchiometrische Menge zudosiertes Alkalimetall herabgesetzt wird.

Das erfindungsgemäße Verfahren erlaubt die Herstellung von Pulvern mit kleinen Primärteilchen, d.h. einer hohen spezifischen Oberfläche und enger Partikelgrößenverteilung. Es wird angenommen, dass dabei der folgende Mechanismus ausgenutzt wird:
1. Die Reduktion verläuft erheblich schneller als die Tantal-Kristallbildung, d.h. der Abbau der durch die Reduktion erzeugten Übersättigung an gelöstem Tantal in dem Verdünnungssalz.
2. Durch die stufenweise Dosierung von Doppelfluorid und Reduktionsmetall in das Verdünnungssalz wird eine periodische Übersättigung erzeugt, wobei unmittelbar im Anschluss an die Dosierung der Übersättigungsgrad für die Tantal-Kristallkeimbildung ausreichend sein sollte.
3. Der Kornverfeinerer besetzt auf bereits vorhandenen Tantal-Kristallen "Halbkristall-Lagen", d.h. Stellen auf der Kristalloberfläche, an denen das Wachstum stattfindet, so dass das weitere Kristallwachstum behindert wird.
4. Stärker gekrümmte Oberflächen, d.h. kleinere Kristalle, weisen, bezogen auf die Oberfläche, eine erheblich größere Zahl von Halbkristall-Lagen auf als größere Kristalle. Aufgrund der geringeren Konzentration des Komverfeineres wird daher das Wachstum kleinerer Kristalle weniger behindert als das der großen Kristalle.

Dieser Mechanismus beruht auf theoretischen Überlegungen, die die Vorteile des erfindungsgemäßen Verfahrens erläutern sollen. Unabhängig davon, ob diese Überlegungen zutreffend sind, soll der angegebene Mechanismus nicht als Einschränkung des Erfindungsgedankens verstanden werden.

Die Aufarbeitung des erhaltenen Reaktionsprodukts erfolgt auf bekannte Weise. Dazu wird das Reaktionsgut abgekühlt. Vorzugsweise erfolgt die Abkühlung in einer Argon-Atmosphäre, um die Aufnahme von Stickstoff oder Sauerstoff durch das Ventilmetallpulver zu vermeiden. Anschließend wird das Reaktionsgut gegebenenfalls nach einem Zerkleinerungsschritt mit einem geeigneten Lösungsmittel, beispielsweise Wasser, ausgelaugt und gewaschen, um Verdünnungssalz und soweit möglich Kornverfeinerer oder dessen Zersetzungsprodukte zu entfernen und das Ventilmetallpulver zu erhalten. Das Ventilmetallpulver kann anschließend getrocknet und in gewünschter Weise weiterverarbeitet werden.

Die folgenden Beispiele dienen der näheren Erläuterung der Erfindung, wobei die Beispiele das Verständnis des erfindungsgemäßen Prinzips erleichtern sollen, und nicht als Einschränkung desselben zu verstehen sind.

### Beispiele

Die in den Beispielen angegebenen spezifischen Oberflächen wurden nach dem bekannten Verfahren von Brunauer, Emmett und Teller (BET-Verfahren) mit einem Gerät Micrometrics Tristar 3000 bestimmt, die Sauerstoffgehalte wurden mittels Leco Gasanalysator TC-436 bestimmt.

### Beispiel 1 (Vergleichsbeispiel)

150 kg K₂TaF₇, je 150 kg KCI und KF und 300g Na₂SO₄ wurden in einem mit Nickel platierten Reaktor aus der Nickel-Chrom-Legierung Inconel^{®} aufgeschmolzen und bei 900°C portionsweise mit 50 kg flüssigem Natrium umgesetzt, wobei 16 Portionen eine Menge von 3 kg und die letzte Portion eine Menge von 2 kg umfasste. Die Portionen wurden so dosiert, dass die Temperatur im Bereich von +/- 10°C konstant gehalten wurde. Nach Erkalten des Reaktionsguts wurde das Salz mit Wasser ausgewaschen. Man erhielt 65 kg Ta-Pulver mit einer spezifischen BET-Oberfläche von 1,5 m²/g, und einem O-Gehalt von 5000 ppm.

### Beispiel 2 (Vergleichsbeispiel)

150 kg K₂TaF₇, je 150 kg KCI und KF und 600 g Na₂SO₄ wurden in einem mit Nickel platierten Reaktor aus der Nickel-Chrom-Legierung Inconel^{®} aufgeschmolzen und bei 900°C portionsweise mit 50 kg flüssigem Natrium umgesetzt, wobei 16 Portionen eine Menge von 3 kg und die letzte Portion eine Menge von 2 kg umfasste. Die Portionen wurden so dosiert, dass die Temperatur im Bereich von +/- 10°C konstant gehalten wurde. Nach Erkalten des Reaktionsguts wurde das Salz mit Wasser ausgewaschen. Man erhielt 65 kg Ta-Pulver mit einer spezifischen BET-Oberfläche von 1,55 m²/g, und einem O-Gehalt von 5200 ppm. Dieses Beispiel zeigt, dass durch Erhöhung der Menge des eingesetzten Komverfeineres (Na₂SO₄) die BET-Oberfläche des erhaltenen Ta-Pulvers kaum größer wird.

### Beispiel 3

150 kg K₂TaF₇, je 150 kg KCl und KF und 300 g Na₂SO₄ wurden in einem mit Nickel platierten Reaktor aus der Nickel-Chrom-Legierung Inconel^{®} aufgeschmolzen und bei 900°C portionsweise mit 50 kg flüssigem Natrium umgesetzt, wobei 16 Portionen eine Menge von 3 kg und die letzte Portion eine Menge von 2 kg umfasste. Im Laufe der Reaktion wurden weitere 15 Portionen zu je 20 g des Kornverfeinerers Na₂SO₄ zudosiert, wobei die Zugabe jeweils nach einer Zugabe von Natrium erfolgte. Die Portionen wurden so dosiert, dass die Temperatur im Bereich von +/- 10°C konstant gehalten wurde. Nach Erkalten des Reaktionsguts wurde das Salz mit Wasser ausgewaschen. Man erhielt 65 kg Ta-Pulver mit einer spezifischen BET-Oberfläche von 1,9 m²/g, und einem O-Gehalt von 5600 ppm. Dies Beispiel zeigt, dass durch die erfindungsgemäße portionsweise Zugabe des Kornverfeineres die BET-Oberfläche des Produkts deutlich erhöht werden kann.

### Beispiel 4

250 kg K₂TaF₇, je 150 kg KCl und KF und 450 g Na₂SO₄ wurden in einem mit Nickel platierten Reaktor aus der Nickel-Chrom-Legierung Inconel^{®} aufgeschmolzen und bei 900°C portionsweise mit 75,6 kg flüssigem Natrium umgesetzt, wobei 25 Portionen eine Menge von 3 kg und die letzte Portion eine Menge von 0,6 kg umfasste. Die Portionen wurden so dosiert, dass die Temperatur im Bereich von +/- 10°C konstant gehalten wurde. Nach Zugabe der ersten 13 Portionen Natrium, wurde noch einmal 450 g Na₂SO₄ zugegeben. Nach Erkalten des Reaktionsguts wurde das Salz mit Wasser ausgewaschen. Man erhielt 110 kg Ta-Pulver mit BET 1,5 m²/g, O 5000 ppm. Der Vergleich mit Beispiel 1 zeigt, dass trotz deutlich erhöhter Menge an umzusetzender Ventilmetallverbindung ein Produkt mit gleicher BET-Oberfläche erhalten werden kann.

### Beispiel 5

250 kg K₂TaF₇, je 150 kg KCI und KF und 450 g Na₂SO₄ wurden in einem mit Nickel platierten Reaktor aus der Nickel-Chrom-Legierung Inconel^{®} aufgeschmolzen und bei 900°C portionsweise mit 75,6 kg flüssigem Natrium umgesetzt, wobei 25 Portionen eine Menge von 3 kg und die letzte Portion eine Menge von 0,6 kg umfasste. Die Portionen wurden so dosiert, dass die Temperatur im Bereich von +/-10°C konstant gehalten wurde. Nach jeder zweiten Natrium-Zugabe wurde eine weitere Portion Kornverfeinerer zugegeben. Die Menge der Portion betrug zu Beginn der Reduktion 146 g und nahm mit weiterem Fortschritt kontinuierlich bis auf 12,3 g ab. Nach Erkalten des Reaktionsguts wurde das Salz mit Wasser ausgewaschen. Man erhielt 110 kg Ta-Pulver mit BET 1,5 m²/g, O 5000 ppm. Der Vergleich mit Beispiel 1 zeigt, dass trotz deutlich erhöhter Menge an umzusetzender Ventilmetallverbindung ein Produkt mit gleicher BET-Oberfläche erhalten werden kann.

### Beispiel 6

150 kg K₂TaF₇, je 150 kg KCI und KF und 300 g Na₂SO₄ wurden in einem mit Nickel platierten Reaktor aus der Nickel-Chrom-Legierung Inconel^{®} mit 50 kg flüssigem Natrium zur Umsetzung gebracht. 15 kg K₂TaF₇, 30 g Na₂SO₄ und die gesamte Menge an KCI und KF wurden vorgelegt und auf 900°C erhitzt. Anschließend wurde die Reduktion durch Zugabe von 2,5 kg Natrium gestartet. Abwechselnd wurden nun 9 mal 15 kg K₂TaF₇ und 30 g Na₂SO₄ und 19 mal 2,5 kg Natrium zugegeben, wobei jeder Zugabe von Ventilmetallverbindung und Kornverfeinerer die Zugabe von zwei Portionen Natrium folgte. Die Portionen wurden so dosiert, dass die Temperatur im Bereich von +/- 10°C konstant gehalten wurde. Nach Erkalten des Reaktionsguts wurde das Salz mit Wasser ausgewaschen. Man erhielt 65 kg Ta-Pulver mit BET 1,9 m²/g, O 6000 ppm. Der Vergleich mit Beispiel 1 zeigt, dass bei Umsetzung gleicher Mengen das erfindungsgemäße Vorgehen zu Pulver deutlich höherer spezifischer Oberfläche führt.

### Beispiel 7

Beispiel 6 wurde wiederholt, wobei das Natrium jedoch in 10 Portionen zu 5 kg zugegeben und die Zugabereihenfolge vertauscht wurde. Es wurden also 5 kg Natrium und die gesamte Menge an KCl und KF vorgelegt und auf 900°C erhitzt. Anschließend wurden 10 Portionen zu 15 kg K₂TaF₇ und zu 30 g Na₂SO₄ und weitere 9 Portionen zu 5 kg Natrium zugegeben, wobei K₂TaF₇ und Na₂SO₄ jeweils gemeinsam im Wechsel mit Natrium zugegeben wurde. Die Portionen wurden so dosiert, dass die Temperatur im Bereich von +/- 10°C konstant gehalten wurde. Nach Erkalten des Reaktionsguts wurde das Salz mit Wasser ausgewaschen. Man erhielt 65 kg Ta-Pulver mit einer BET-Oberfläche von 2,3 m²/g und einem O-Gehalt von 7500 ppm. Der Vergleich mit Beispiel 1 zeigt, dass auch bei Vorlage von Natrium das erfindungsgemäße Vorgehen zu Pulver deutlich höherer spezifischer Oberfläche führt.

### Beispiel 8

125 kg K₂TaF₇, je 125 kg KCl und KF und 350 g Na₂SO₄ wurden in einem mit Nickel platierten Reaktor aus der Nickel-Chrom-Legierung Inconel^{®} aufgeschmolzen und bei 900°C portionsweise mit 36 kg flüssigem Natrium umgesetzt, wobei jede Portion eine Menge von 3 kg umfasste. Anschließend wurden weitere 125 kg K₂TaF₇ und 350 g Na₂SO₄ nachdosiert und portionsweise mit 39,6 kg Natrium reduziert, wobei mit Ausnahme der letzten Portion jede Portion wiederum eine Menge von 3 kg umfasste. Nach Erkalten des Reaktionsguts wurde das Salz mit Wasser ausgewaschen. Man erhielt 110 kg Ta-Pulver mit BET 1,5 m²/g, O 5000 ppm. Der Vergleich mit Beispiel 1 zeigt, dass trotz deutlich erhöhter Menge an umzusetzender Ventilmetallverbindung ein Produkt mit gleicher BET-Oberfläche erhalten werden kann.

### Beispiel 9

Beispiel 8 wurde wiederholt, wobei diesmal jedoch nur 2 x 300 g Na₂SO₄ eingesetzt wurden und die zweite Portion K₂TaF₇ nicht fest zugegeben wurde, sondern in einem separaten Behälter bei 800°C aufgeschmolzen und über eine Rohrleitung in den Reaktor überführt wurde. Man erhielt 110 kg Ta-Pulver mit BET 1,9 m²/g, O 6800 ppm. Der Vergleich mit Beispiel 1 zeigt, dass trotz deutlich erhöhter Menge an umzusetzender Ventilmetallverbindung ein Produkt mit höherer BET-Oberfläche erhalten werden kann.

### Beispiel 10

150 kg K₂TaF₇, je 150 kg KCI und KF und 500 g Na₂SO₄ wurden in einem mit Nickel platierten Reaktor aus der Nickel-Chrom-Legierung Inconel^{®} bei 850°C mit 50 kg flüssigem Natrium zur Umsetzung gebracht. K₂TaF₇ wurde in flüssiger Form zugegeben. Dazu wurde es in einem separaten Behälter bei 700°C aufgeschmolzen und über eine Rohrleitung in den Reaktor dosiert. Die Zugabe von K₂TaF₇, Na₂SO₄ und flüssigem Natrium erfolgte portionsweise in jeweils 10 gleichgroßen Portionen, wobei K₂TaF₇ und Na₂SO₄ jeweils gemeinsam und im Wechsel mit dem Natrium zudosiert wurden. Jede Portion von 15 kg K₂TaF₇ wurde jeweils innerhalb von 1-2 Minuten dosiert. Jeweils 5 kg flüssiges Natrium wurde innerhalb von 20 Sekunden zudosiert. Dabei wurde durch intensives Mischen gewährleistet, dass beide Reaktanden eindispergiert waren, bevor es zur Reaktion kam. Die Temperatur wurde durch intensive Kühlung und Pausen zwischen den einzelnen Dosierschritten bei 850°C +/- 10°C gehalten. Nach Erkalten des Reaktionsguts wurde das Salz mit Wasser ausgewaschen. Man erhielt 65 kg Ta-Pulver mit einer BET-Oberfläche von 3,0 m²/g und einem O-Gehalt von 10000 ppm.

## Patentansprüche

1. Verfahren zur Herstellung von Pulvern der Metalle der Gruppe TVb (Ti, Zr, Hf), Vb (V, Nb, Ta) und Vlb (Cr, Mo, W) des Periodensystems der Elemente sowie deren Legierungen durch Reduktion von Verbindungen dieser Metalle mit einem Alkalimetall in Gegenwart eines Verdünnungssalzes, **dadurch gekennzeichnet, dass** die Reduktion in Gegenwart eines Kornverfeinerers erfolgt, der portionsweise in mindestens 2 Portionen oder kontinuierlich zugegeben wird.

2. Verfahren nach Anspruch 1, **dadurch gekennzeichnet, dass** es sich bei dem Ventilmetall um Tantal handelt und als Ventilmetallverbindung K₂TaF₇, Na₂TaF₇ oder Mischungen davon eingesetzt werden.

3. Verfahren nach einem der Ansprüche 1 oder 2, **dadurch gekennzeichnet, dass** als Alkalimetall Na, K oder deren Mischungen oder Legierungen eingesetzt werden.

4. Verfahren nach einem der Ansprüche 1 bis 3, **dadurch gekennzeichnet, dass** es sich bei dem Kornverfeinerer um eine schwefelhaltige, eine phosphorhaltige, eine borhaltige und/oder eine siliciumhaltige Verbindung handelt.

5. Verfahren nach einem der Ansprüche 1 bis 4, **dadurch gekennzeichnet, dass** es sich bei dem Kornverfeinerer um Schwefel, Alkalimetallsulfat, Alkalimetallsulfit, Alkalimetallsulfid und/oder Tantalsulfid handelt.

6. Verfahren nach einem der Ansprüche 1 bis 5, **dadurch gekennzeichnet, dass** es sich bei dem Kornverfeinerer um Na₂SO₄ handelt.

7. Verfahren nach einem der Ansprüche 1 bis 6, **dadurch gekennzeichnet, dass** der Kornverfeinerer portionsweise in 2 bis 50 gleich großen Portionen zudosiert wird.

8. Verfahren nach einem der Ansprüche 1 bis 7, **dadurch gekennzeichnet, dass** die Reduktion semi-kontinuierlich durchgeführt wird, wobei das Verdünnungssalz in einem Reaktor vorgelegt und Ventilmetallverbindung und Alkalimetall abwechselnd zudosiert werden, wobei die zudosierte Menge der Ventilmetallverbindung stöchiometrisch jeweils einem Mehrfachen der Menge des zudosierten Alkalimetalls entspricht.

9. Verfahren nach einem der Ansprüche 1 bis 8, **dadurch gekennzeichnet, dass** der Kornverfeinerer jeweils zusammen mit der Ventilmetallverbindung zudosiert wird.

10. Verfahren nach einem der Ansprüche 8 bis 9, **dadurch gekennzeichnet, dass** die jeweils zudosierte Menge an Ventilmetallverbindung und Kornverfeinerer proportional zur Menge der durch die Reduktion erhöhten Menge Verdünnungssalz im Reaktor erhöht wird oder die Dosierfrequenz entsprechend erhöht wird, wobei gegen Ende der Reduktion die Menge an jeweils zudosierter Portion Ventilmetallverbindung auf die stöchiometrische Menge zudosiertes Alkalimetall herabgesetzt wird.

## Claims

1. Process for producing powders of metals from Group IVb (Ti, Zr, Hf), Vb (V, Nb, Ta) and VIb (Cr, Mo, W) of the periodic system of the elements and alloys thereof by reduction of compounds of said metals with an alkali metal in the presence of a diluting salt, **characterized in that** the reduction takes place in the presence of a grain-refining agent which is added in at least two portions or continuously.

2. Process according to Claim 1, **characterized in that** the valve metal is tantalum and the valve metal compound used is K₂TaF₇, Na₂TaF₇ or mixtures thereof.

3. Process according to either of Claims 1 or 2, **characterized in that** the alkali metal used is Na, K or mixtures or alloys thereof.

4. Process according to one of Claims 1 to 3,
**characterized in that** the grain-refining agent is a sulphur-containing compound, a phosphorus-containing compound, a boron-containing compound and/or a silicon-containing compound.

5. Process according to one of Claims 1 to 4,
**characterized in that** the grain-refining agent is sulphur, alkali metal sulphate, alkali metal sulphite, alkali metal sulphide and/or tantalum sulphide.

6. Process according to one of Claims 1 to 5,
**characterized in that** the grain-refining agent is Na₂SO₄.

7. Process according to one of Claims 1 to 6,
**characterized in that** the grain-refining agent is metered in in from 2 to 50 identically sized portions.

8. Process according to one of Claims 1 to 7,
**characterized in that** the reduction is carried out semi-continuously, with the diluting salt being introduced into a reactor and valve metal compound and alkali metal being metered in alternately, with the quantity of the valve metal compound which is metered in in each case corresponding in stoichiometric terms to a multiple of the quantity of the alkali metal which is metered in.

9. Process according to one of Claims 1 to 8,
**characterized in that** the grain-refining agent is in each case metered in together with the valve metal compound.

10. Process according to either of Claims 8 and 9, **characterized in that** the quantity of valve metal compound and grain-refining agent which is in each case metered in is increased proportionally to the quantity of diluting salt in the reactor, which has been increased by the reduction, or the metering frequency is increased accordingly, with the quantity of valve metal compound per portion metered in being lowered, towards the end of the reduction, to the stoichiometric quantity of alkali metal metered in.

## Revendications

1. Procédé pour la préparation de poudres des métaux du groupe IVb (Ti, Zr, Hf), Vb (V, Nb, Ta) et VIb (Cr, Mo, W) du système périodique des éléments ainsi que de leurs alliages par réduction de composés de ces métaux avec un métal alcalin en présence d'un sel de dilution, **caractérisé en ce que** la réduction est réalisée en présence d'un agent d'affinage des grains qui est ajouté par portions, en au moins 2 portions, ou en continu.

2. Procédé selon la revendication 1, **caractérisé en ce qu'**il s'agit, pour le métal de soupape, de tantale et **en ce qu'**on utilise comme composé de métal de soupape K₂TaF₇, Na₂TaF₇ ou leurs mélanges.

3. Procédé selon l'une quelconque des revendications 1 ou 2, **caractérisé en ce qu'**on utilise comme métal alcalin Na, K ou leurs mélanges ou alliages.

4. Procédé selon l'une quelconque des revendications 1 à 3, **caractérisé en ce qu'**il s'agit, pour l'agent d'affinage des grains, d'un composé contenant du soufre, du phosphore, du bore et/ou du silicium.

5. Procédé selon l'une quelconque des revendications 1 à 4, **caractérisé en ce qu'**il s'agit, pour l'agent d'affinage des grains, du soufre, d'un sulfate de métal alcalin, d'un sulfite de métal alcalin, d'un sulfure de métal alcalin et/ou d'un sulfure de tantale.

6. Procédé selon l'une quelconque des revendications 1 à 5, **caractérisé en ce qu'**il s'agit, pour l'agent d'affinage des grains, de Na₂SO₄.

7. Procédé selon l'une quelconque des revendications 1 à 6, **caractérisé en ce que** l'agent d'affinage des grains est ajouté en dosant par portions, en 2 à 50 portions de taille identique.

8. Procédé selon l'une quelconque des revendications 1 à 7, **caractérisé en ce que** la réduction est réalisée de manière semi-continue, où le sel de dilution est disposé au préalable dans un réacteur et le composé de métal de soupape et le métal alcalin sont ajoutés en dosant alternativement, la quantité ajoutée en dosant du composé de métal de soupape correspondant stoechiométriquement à chaque fois à un multiple de la quantité de métal alcalin ajoutée en dosant.

9. Procédé selon l'une quelconque des revendications 1 à 8, **caractérisé en ce que** l'agent d'affinage des grains est à chaque fois ajouté en dosant ensemble avec le composé de métal de soupape.

10. Procédé selon l'une quelconque des revendications 8 à 9, **caractérisé en ce que** la quantité à chaque fois ajoutée en dosant de métal de soupape et d'agent d'affinage des grains est augmentée dans le réacteur proportionnellement à la quantité de sel de dilution qui est augmentée par réduction ou la fréquence de dosage est augmentée de manière correspondante, la quantité de portion à chaque fois ajoutée en dosant de composé de métal de soupape étant diminuée à la fin de la réduction à la quantité stoechiométrique de métal alcalin ajouté en dosant.
